# FASCICULE DE BREVET EUROPEEN

(11) **EP 0 670 993 B1**
(45) Date de publication et mention de la délivrance du brevet: **04.02.1998**
(21) Numéro de dépôt: 94900860.1
(22) Date de dépôt: 19.11.1993
(51) Int. Cl.: G01J 5/00, G01N 21/21

(54) **PROCEDE ET APPAREIL POUR MESURER PAR ELLIPSOMETRIE LA TEMPERATURE D'UN OBJET, NOTAMMENT SEMI-CONDUCTEUR**
VERFAHREN UND VORRICHTUNG ZUM MESSEN DER TEMPERATUR EINES OBJEKTES, BESONDERS EINES HALBLEITERS, MITTELS ELLIPSOMETRIE
METHOD AND APPARATUS FOR MEASURING BY ELLIPSOMETRY THE TEMPERATURE OF AN OBJECT, PARTICULARLY SEMICONDUCTOR

(30) Priorité: 25.11.1992 FR 9214430
(43) Date de publication de la demande: 13.09.1995
(73) Titulaire: ECOLE CENTRALE DE LYON, F-69131 Ecully Cédex (FR)
(72) Inventeur: JOSEPH, Jacques, F-69130 Ecully (FR); HU, Yao-Zhi, Chapel Hill, NC 27519 (US); IRENE, Eugène, Chapel Hill, NC 27514 (US)
(74) Mandataire: Thibault, Jean-Marc
(86) Numéro de dépôt international: FR9301142
(87) Numéro de publication internationale: WO9412857

(56) Documents cités:
- EP-A- 0 102 470
- EP-A- 0 483 394
- US-A- 4 332 833
- US-A- 4 969 748
- US-A- 4 979 134
- JOURNAL OF THE OPTICAL SOCIETY OF AMERICA, vol.8, no.2, Février 1991, NEW YORK US pages 311 - 313 D.BEAGLEHOLE 'Isoellipsometric-parameter curves for layers on silicon'

## Description

### DOMAINE TECHNIQUE :

La présente invention concerne le domaine technique de la mesure, à l'aide de techniques optiques sans pénétration, de la température de surface d'un objet, en particulier, un élément semi-conducteur,

Dans le domaine technique préféré de l'invention, qui est celui de la fabrication des matériaux semi-conducteurs, les traitements de surface utilisés, tels que le dépôt de films, la gravure, le recuit ou la croissance de films épitaxiés, nécessitent pour leur contrôle, de connaître avec précision la température du substrat.

### TECHNIQUE ANTERIEURE :

Pour atteindre cet objectif, il est connu, par l'état de la technique, d'utiliser un thermocouple pour la mesure de la température des semi-conducteurs. L'inconvénient majeur de cette technique est lié à la difficulté d'établir un contact thermique parfait entre le thermocouple et le matériau semi-conducteur. De plus. les thermocouples présentent l'inconvénient de posséder des temps de réponse lents conduisant à l'obtention d'une valeur moyenne de température ne permettant pas de déceler les changements de température limités dans le temps.

Il est connu une autre méthode de mesure de la température qui est celle relative à la pyrométrie optique ou infrarouge. Cette technique vise à diriger un faisceau lumineux de longueur d'onde donnée sur le matériau semi-conducteur et à mesurer l'énergie optique émise par le matériau semi-conducteur. A partir de la mesure de cette énergie, il est possible, en connaissant l'émittance du matériau, de connaître la température du corps émetteur de radiation. La pyrométrie optique offre l'avantage majeur d'autoriser la mesure de la température d'un substrat ne nécessitant pas un contact direct ou physique avec le matériau semi-conducteur. Cependant, il apparaît que la pyrométrie optique peut donner des résultats différents en fonction de l'émittance qui est utilisée. De plus, il convient de s'affranchir des rayonnements lumineux parasites, tels que ceux issus des lampes chauffantes. Enfin, cette méthode est peu précise aux basses températures.

La demande de brevet européen 0 483 394 a proposé, également, une méthode optique pour déterminer la température d'une surface. Cette technique consiste à mesurer, d'une part, le changement de polarisation d'un faisceau lumineux dans la réflexion sur une surface et, d'autre par, le degré de polarisation. Il est à considérer que le changement de polarisation est relié au coefficient de réflexion de la couche réfléchissante. Une telle technique permet de mesurer la température thermodynamique d'un objet, de manière précise en corrigeant les mesures de certains effets parasites, notamment l'effet de la rugosité et du bruit de fond, dus à l'émission thermique des autres parties chauffées, comme les parois des réacteurs. Cependant, cette méthode présente des inconvénients. Le premier concerne la difficulté de prendre en compte l'éventuelle présence d'une couche superficielle à partir d'une mesure effectuée à une seule longueur d'onde. En effet, il apparaît que les variations de température peuvent s'accompagner de variations des épaisseurs de la couche entraînant une erreur dans la température mesurée. Un autre inconvénient de cette technique a trait à la difficulté de sa mise en oeuvre en raison, notamment, de l'emploi d'un dispositif complexe et totalement nouveau.

### EXPOSE DE L'INVENTION :

L'objet de l'invention vise donc à s'affranchir des inconvénients énoncés ci-dessus en proposant un procédé pour mesurer la température de surface d'un objet, tel qu'un semi-conducteur, selon une technique de mesure d'ellipsométrie qui tient compte de la croissance d'une couche de matériau sur la surface de l'objet, en réalisant lesdites mesures d'ellipsométrie par la mesure du changement de polarisation d'un faisceau électromagnétique dans la réflexion sur la surface de l'objet.

Pour atteindre cet objectif, le procédé selon l'invention consiste à :
- réaliser des mesures d'ellipsométrie sur l'objet, en vue de déterminer, à partir des paramètres mesurés, d'une part au moins une première énergie de photons d'un faisceau électromagnétique, pour laquelle les mesures sont sensiblement indépendantes de la température, et d'autre part, au moins une deuxième énergie de photons d'un faisceau électromagnétique, pour laquelle les mesures sont dépendantes de la température,
- créer et diriger vers l'objet, un faisceau incident électromagnétique comportant au moins la première et la deuxième énergies de photons, ci-dessus définies,
- mesurer, à partir des paramètres d'ellipsomètrie, le changement de polarisation pour la première et la deuxième énergies de photons du ou des faisceaux réfléchis par l'objet,
- déterminer, à partir de la mesure du changement de polarisation pour la première énergie de photons du faisceau, l'épaisseur de la couche du matériau,
- et à déterminer la température de la surface de l'objet, à partir de la mesure du changement de polarisation pour la deuxième énergie de photons du faisceau et en tenant compte de l'épaisseur de la couche de matériau préalablement déterminée.

Un autre objet de l'invention est de proposer un procédé de mesure apte à être mis en oeuvre aisément à partir des dispositifs connus de mesure. A cet effet, le dispositif de mise en oeuvre du procédé selon l'invention comprend :
- un système de création d'un faisceau lumineux délivrant un faisceau d'énergie incident sur le trajet duquel est placé un polarisateur et/ou un modulateur,
- un système de mesure de la polarisation du faisceau d'énergie réfléchi par l'objet,
- et une unité de traitement reliée au système de mesure et comportant :
   . des moyens permettant de déterminer, pour la couche de matériau considérée, la variation des paramètres mesurés par ellipsométrie en fonction de la longueur d'onde du faisceau,
   . des moyens de détermination de l'épaisseur de la couche de matériau en fonction du changement de polarisation du faisceau lumineux,
   et se trouve caractérisé par :
   - un moyen pour sélectionner au moins un faisceau électromagnétique présentant au moins deux énergies de photons de valeurs déterminées à partir de la variation de l'indice optique de l'objet en fonction de la longueur d'onde, l'une des énergies de photons étant dépendante de la température, tandis que l'autre est sensiblement indépendante de la température,
   - des moyens de détermination de l'épaisseur de la couche de matériau pour le faisceau présentant la première énergie de photons,
   - et des moyens de calcul de la température de la surface de l'objet, à partir de la mesure du changement de polarisation pour la deuxième énergie de photons du faisceau et en tenant compte de l'épaisseur de la couche de matériau préalablement déterminée.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

### BREVE DESCRIPTION DES DESSINS :

La **Fig. 1** représente la fonction diélectrique du silicium à différentes températures.

La **Fig. 2** montre des courbes obtenues à partir de celles illustrées à la **Fig. 1** et représentent la variation du rapport complexe des coefficients de réflexion mesurés par ellipsométrie en fonction de la longueur d'onde du faisceau, pour deux augmentations de température.

La **Fig. 3** montre des courbes représentant la variation du rapport complexe des coefficients de réflexion en fonction de la longueur d'onde du faisceau pour des accroissements d'épaisseur de la couche de silice déposée sur du silicium.

La **Fig. 4** est un schéma illustrant un dispositif permettant la mise en oeuvre du procédé selon l'invention.

### MEILLEURE MANIERE DE REALISER L'INVENTION :

Le procédé selon l'invention consiste à mesurer avec précision la température de surface d'un objet, au sens général, constitué, de préférence mais non exclusivement, en un matériau semi-conducteur sur la surface duquel des traitements sont réalisés, tels qu' un dépôt de film, une gravure ou une croissance de films épitaxiés. Le procédé a pour objet ainsi de déterminer la température de surface de l'objet en tenant compte de l'éventuelle croissance d'une couche d'un matériau déposé sur l'objet ou du changement de morphologie de la surface.

Le procédé selon l'invention vise à déterminer la température de l'objet à partir de mesures d'ellipsométrie. La technique d'ellipsométrie qui est bien connue en soi consiste à mesurer le changement de polarisation de la lumière dans la réflexion sur la surface d'un objet. Ce changement de polarisation est relié aux coefficients de réflexion de l'objet, qui dépendent eux-même des propriétés optiques de l'objet. Ces deux coefficients de réflexion correspondent aux deux états de polarisation parallèle et perpendiculaire au plan de polarisation. Pratiquement, la mesure par ellipsométrie se traduit par deux paramètres qui sont généralement deux angles exprimés en degrés ou par un nombre complexe p, qui est le rapport des deux coefficients de réflexion. Dans la suite de la description, les deux paramètres de mesure sont représentés par **P**.

De la même façon, la description qui suit utilise la notion d'énergie de photons **E** qui doit, bien entendu, être considérée équivalente à la notion de la longueur d'onde λ à laquelle elle est reliée par une relation connue.

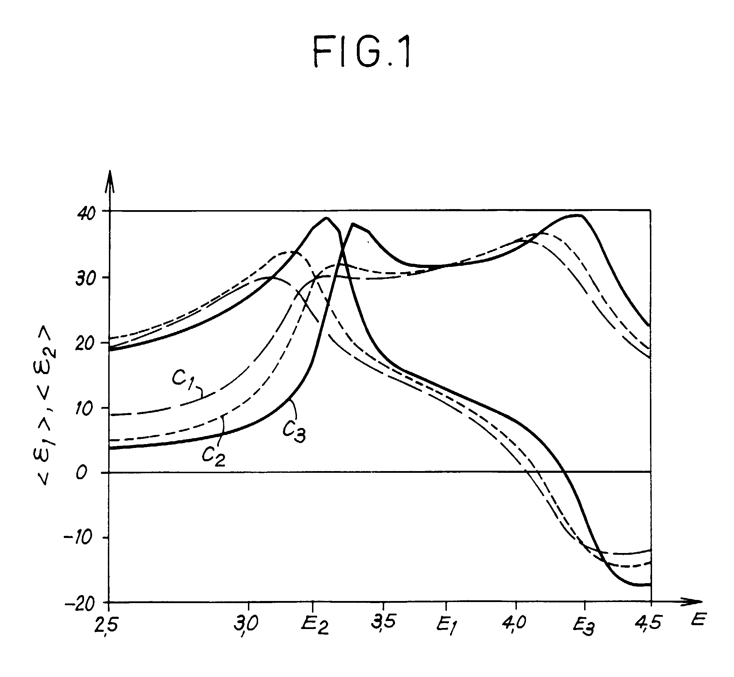

Le procédé vise à réaliser des mesures d'ellipsométrie sur l'objet en vue de déterminer, à partir des paramètres mesurés, **PE**_{**1**} et **PE**_{**2**}**,** respectivement, d'une part, au moins une première énergie de photons **E**_{**1**} d'un faisceau électromagnétique pour laquelle les mesures sont sensiblement indépendantes de la température et, d'autre part, au moins une deuxième énergie de photons **E**_{**2**} d'un faisceau électromagnétique pour laquelle les mesures sont dépendantes de la température. A cette fin et tel que cela ressort plus précisément de la **Fig. 1**, il est procédé à la mesure du spectre de la fonction diélectrique qui correspond à la variation de l'indice complexe optique du matériau en fonction de l'énergie de photons **E**. Dans l'exemple illustré, les courbes C₁, C₂, C₃ représentent la loi de variation de la fonction diélectrique **ε**_{**1**}, **ε**_{**2**} du silicium en fonction de l'énergie de photons **E** pour trois températures différentes, repectivement 30, 200 et 300° C.

Ces courbes montrent clairement qu'il existe, d'une part, au moins une énergie **E**_{**1**} pour laquelle l'indice optique est quasi indépendant de la température et, d'autre part, une deuxième **E**_{**2**}, voire une troisième énergie **E**_{**3**} pour lesquelles l'indice optique est très dépendant de la température. Dans le cas du silicium, la première énergie **E**_{**1**} est comprise entre 3,5 et 4 électrons-volts et, de préférence, égale à 3,75 électrons-volts (330 nanomètres), tandis que les deuxième et troisième énergies **E**_{**2**}, **E**_{**3**} sont comprises respectivement entre (3,25 à 3,4) et (4,25 à 4,5) électrons-volts et, de préférence, égales à 3,30 électrons-volts (425 nanomètres) et à 4,30 électrons-volts (288 nanomètres). Il apparaît donc que pour des énergies de photons voisines de **E**_{**1**}, la température modifie peu les propriétés optiques de l'objet contrairement au reste du spectre.

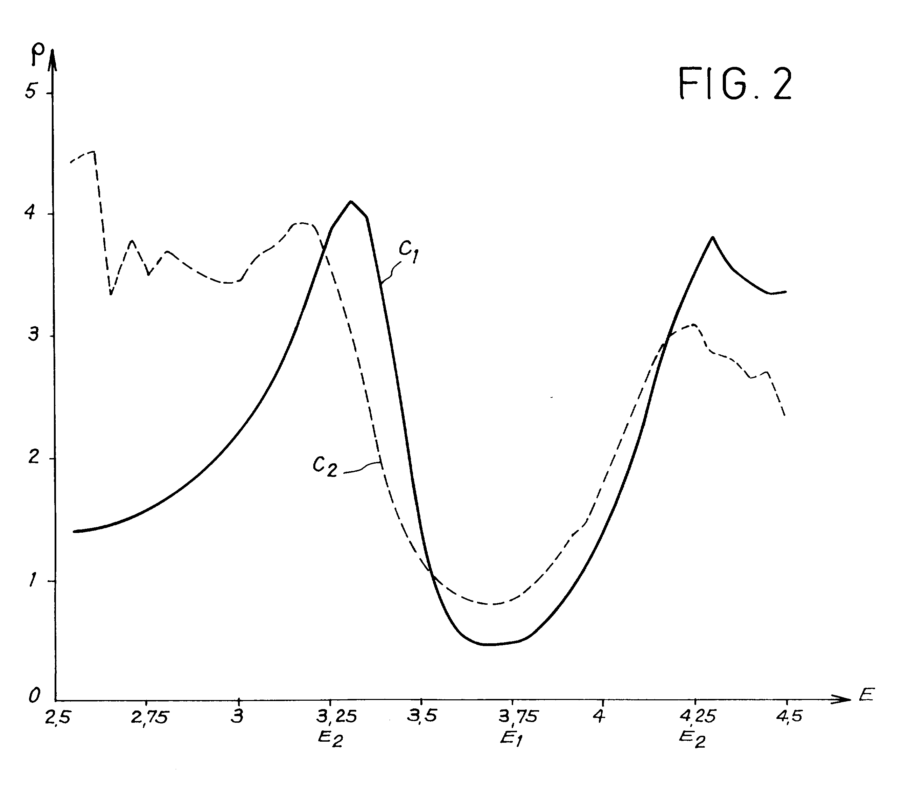

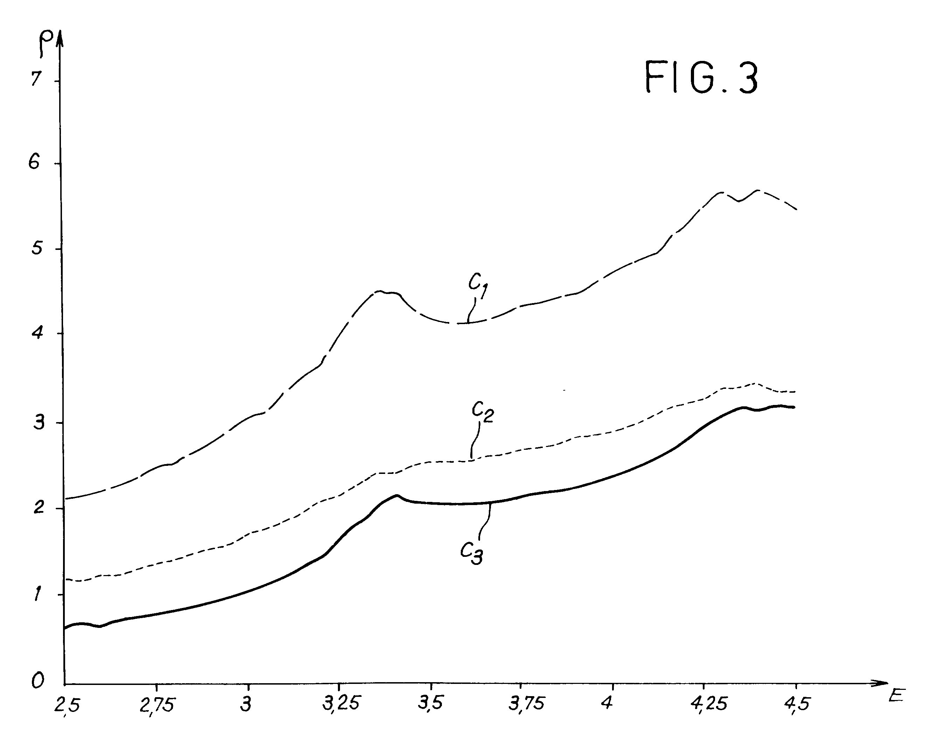

Les **Fig. 2** et **3** permettent de corroborer cette analyse. La **Fig. 2** représente l'accroissement de la quantité **ρ** mesurée par ellipsométrie sur un substrat de silicium en fonction de l'énergie **E,** pour deux augmentations de température respectivement de 25 à 200° C (courbe C₁) et de 200 à 300° C (courbe C₂). Cette courbe représente la variation de la sensibilité de la mesure à la température en fonction de l'énergie de photons. Ces courbes montrent clairement qu'une mesure d'ellipsométrie faite autour de la valeur **E**_{**1**} est quasi indépendante de la température, tandis que les mesures faites autour des valeurs **E**_{**2**} et **E**_{**3**} sont les plus sensibles aux variations de température.

La **Fig. 3** représente les variations de la quantité **ρ** mesurée par ellipsométrie en fonction de l'énergie de photons **E,** pour trois accroissements d'épaisseur, pour une couche de silice, respectivement de 0 à 3,2 nanomètres (courbe C₁), de 3,2 à 6,4 nanomètres (courbe C₂) et de 6,4 à 10,7 nanomètres (courbe C3). Les courbes C₁ à C₃ sont réalisées en maintenant la température constante. Cette figure montre que la variation de sensibilité est continue, ce qui permet de constater que toutes les énergies peuvent être utilisées pour la mesure d'épaisseur. Il est à noter que la sensibilité s'améliore avec l'accroissement de l'énergie de photons.

D'après ce qui précède, le silicium présente donc la particularité de posséder une réponse optique qui, pour une énergie de photons, est indépendante de la température et qui, pour une autre énergie de photons, est fortement dépendante de la température. Il est à considérer que cette propriété est commune à tous les semi-conducteurs qui possèdent, bien entendu, des valeurs caractéristiques **E**_{**1**}**, E**_{**2**} différentes pour chacun d'eux.

Ainsi, sur le Phosphure d'indium, la première **E**_{**1**} et la deuxième **E**_{**2**} ou troisième **E**_{**3**} énergies de photons sont sensiblement égales, respectivement à 3,4 eV (365 nm), 3 eV (414 nm) et 4,6 (270 nm). De la même façon, sur le germanium, la première **E**_{**1**} et la deuxième **E**_{**2**} ou troisième **E**_{**3**} énergies de photons sont égales sensiblement, respectivement à 2,9 eV (428 nm), 2,1 eV (590 nm) et 4,3 eV (289 nm). Sur l'Arséniure de Gallium, la première **E**_{**1**} et la deuxième **E**_{**2**} ou troisième **E**_{**3**} énergies de photons sont sensiblement égales, respectivement à 3,5 eV (354 nm), 2,5 eV (496 nm) et 4,5 eV (275 nm). Ces valeurs représentent les valeurs moyennes des énergies de photons autour desquelles il est possible de choisir la bande passante des filtres optiques pour la mesure.

Il est à considérer que le procédé selon l'invention peut être appliqué à un objet dont le matériau constitutif ne présente pas une telle propriété. Dans ce cas, une pastille d'un matériau qui comporte une telle propriété peut être fixée sur la surface de l'objet dont la température est à mesurer. La pastille est donc soumise aux mêmes traitements que l'objet.

Le procédé selon l'invention consiste ensuite à créer et diriger vers l'objet, dont la température est à mesurer, au moins un faisceau incident d'énergie électromagnétique comportant au moins la première **E**_{**1**} et la deuxième **E**_{**2**} énergies de photons. Les changements de polarisation pour la première et la deuxième énergies de photons du ou des faisceaux d'énergie réfléchis par l'objet sont ensuite mesurés à partir respectivement des paramètres d'ellipsométrie **P' E**_{**1**} et **P' E**_{**2**}**.**

Le procédé consiste ensuite à déterminer, à partir de la mesure du changement de polarisation de la première énergie de photons **E**_{**1**} du faisceau, l'épaisseur de la couche de matériau revêtant la surface de l'objet. L'épaisseur de la couche de matériau est calculée d'une manière classique, à partir des paramètres d'ellipsométrie **P' E**_{**1**} mesurés.

Le procédé vise, alors, à déterminer la température de surface de l'objet à partir de la mesure du changement de polarisation pour la deuxième énergie de photons **E**_{**2**} du faisceau et en tenant compte de l'épaisseur de la couche de matériau préalablement calculée. La température mesurée correspond à la température effective de la surface de l'objet, dans la mesure où la variation de température consécutive à la variation d'épaisseur de la courbe de matériau est supprimée.

Avantageusement, la température de surface de l'objet est déterminée de la manière suivante. Une phase d'étalonnage est réalisée afin de déterminer, pour un objet nu, c'est-à-dire dépourvu de couche superficielle, la loi de variation des paramètres de mesure d'ellipsométrie en fonction de la température de l'objet chauffé dans une plage utile de température. Pendant cet étalonnage, la température est détectée par un moyen approprié, tel qu'un thermocouple collé sur la face de l'objet. Un tel étalonnage permet donc d'obtenir une courbe de variation des paramètres d'ellipsométrie en fonction de la température pour un substrat nu.

Il est ensuite procédé à la détermination de paramètres fictifs **P"E**_{**2**} à partir des paramètres d'ellipsométrie **P'E**_{**2**} mesurés pour la deuxième énergie de photons **E**_{**2**}. Les paramètres fictifs **P"E**_{**2**} correspondent à ceux qui seraient obtenus pour un substrat nu auquel l'épaisseur calculée, à partir des paramètres mesurés **P'E**_{**1**}**,** aurait été enlevée. A partir des paramètres fictifs **P"E**_{**2**} ainsi calculés et de la loi de variation précédemment réalisée lors de l'étalonnage, il peut être déterminé la température réelle de l'objet. La température de l'objet calculée tient donc compte de l'épaisseur du dépôt réalisé sur l'objet.

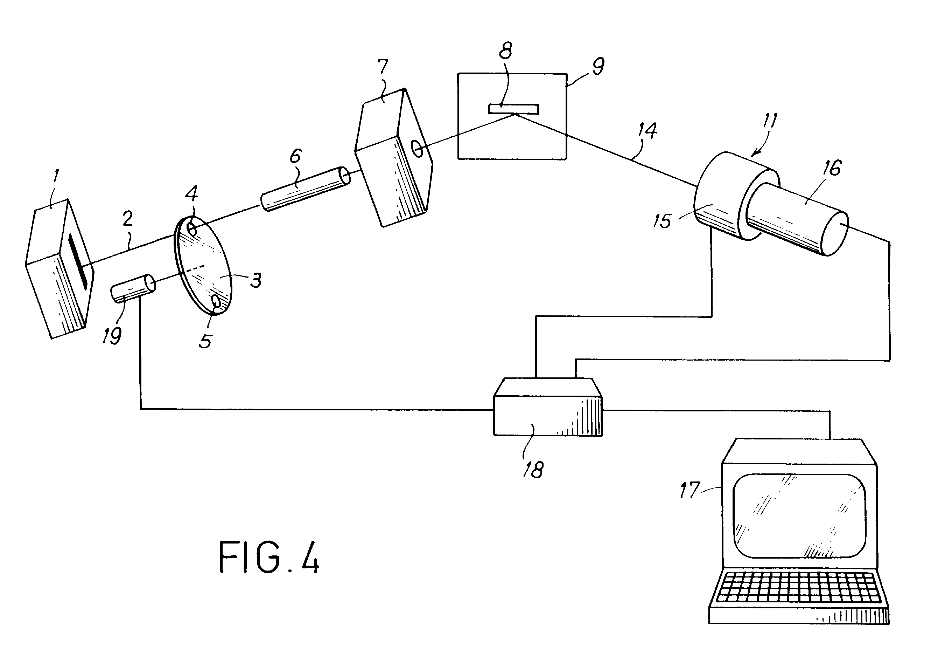

La **Fig. 4** illustre un exemple de réalisation d'un dispositif de mesure apte à mettre en oeuvre le procédé de l'invention tel que décrit ci-dessus.

Le dispositif comporte une source lumineuse **1** délivrant un faisceau lumineux **2** comportant au moins les énergies de photons **E**_{**1**}**, E**_{**2**}**.** Le dispositif comprend, également, un moyen de sélection **3** des énergies de photons **E**, et **E**_{**2**} constitué, dans l'exemple illustré, par deux filtres **4, 5** dont l'un laisse passer l'énergie de photons **E**_{**1**} et l'autre laisse passer l'énergie de photons **E**_{**2**}**.** Les filtres **4, 5** sont montés sur un disque rotatif et sont destinés à venir chacun successivement s'interposer sur le trajet du faisceau incident **2**.

Le dispositif comprend, également, un collimateur **6** suivi d'un polarisateur et/ou d'un modulateur **7**. Le collimateur **6** et le polarisateur ou modulateur **7** sont placés sur le trajet du faisceau incident **2** qui est destiné à être réfléchi par un objet **8**, sur lequel la température doit être déterminée. D'une manière classique, l'objet **8** est destiné à être placé dans une enceinte classique de traitement **9** qui ne sera pas décrite plus précisément dans la mesure où elle ne fait pas partie de l'invention.

Le dispositif comprend, également, un système de mesure **11** de la polarisation du faisceau d'énergie **14** réfléchi par l'objet **8**. Dans l'exemple illustré, le système de mesure **11** est constitué par un polarisateur tournant **15** suivi par un photomultiplicateur **16**. Bien entendu, il pourrait être utilisé un système de mesure de la modulation dans le cas de la mise en oeuvre d'un modulateur **7**.

Le dispositif comprend, également, une unité de traitement **17** reliée par un circuit d'interface **18** au système de mesure **11** et à un organe de commande **19** du disque **3**. L'unité de traitement 17, réalisée à partir d'un ordinateur, comporte des moyens permettant de déterminer les paramètres de mesure par ellipsométrie. L'unité 17 comporte également les moyens de calcul de la température de la surface de l'objet, conformément au procédé selon l'invention. Ces moyens assurent le calcul de la température de la surface de l'objet à partir du changement de polarisation pour la deuxième énergie de photons du faisceau et en tenant compte de l'épaisseur de la courbe de matériau préalablement calculée.

Le dispositif tel que décrit ci-dessus, correspond à un ellipsomètre classique auquel sont ajoutés, notamment, les moyens de création et de sélection des deux énergies de photons **E**_{**1**}**, E**_{**2**}**.**

A cet égard, il est à noter que, dans l'exemple illustré, il est prévu de diriger successivement vers l'objet des faisceaux incidents présentant les première **E**_{**1**} et deuxième **E**_{**2**} énergies de photons par la sélection des filtres **4, 5.** Bien entendu, il peut être envisagé de soumettre l'objet **8** à un faisceau comportant les première et deuxième énergies de photons.

Il est à noter que l'invention peut être mise en oeuvre à partir d'un dispositif connu dans lequel le polarisateur et/ou le modulateur **7** est remplacé par un polarisateur tournant connecté au circuit interface **18**, tandis que le système de mesure **11**est formé par un analyseur fixe. Dans ce cas, le dispositif de sélection **3** est interposé entre l'analyseur fixe et le photomultiplicateur **16.**

### POSSIBILITE D'APPLICATION INDUSTRIELLE:

D'une manière habituelle, un ellipsomètre est déjà utilisé pour mesurer les épaisseurs d'une couche d'un matériau, de sorte que le procédé selon l'invention peut être aisément mis en oeuvre à partir d'un ellipsomètre classique. Ainsi, la méthode selon l'invention permet de mesurer, avec un unique dispositif, l'épaisseur et la température d'une couche d'un matériau notamment semi-conducteur.

## Revendications

1. Procédé pour mesurer la température de surface d'un objet (8) sur lequel est déposée au moins une couche d'un matériau, en réalisant des mesures d'ellipsométrie consistant à mesurer le changement de polarisation d'un faisceau électromagnétique dans la réflexion sur la surface de l'objet, caractérisé en ce qu'il consiste à :
- réaliser des mesures d'ellipsométrie sur l'objet, en vue de déterminer, à partir des paramètres mésurés (**PE**_{**1**}**, PE**_{**2**}), d'une part, au moins une première énergie de photons (**E**_{**1**}) d'un faisceau électromagnétique, pour laquelle les mesures sont sensiblement indépendantes de la température, et d'autre part, au moins une deuxième énergie de photons (**E**_{**2**}) d'un faisceau électromagnétique, pour laquelle les mesures sont dépendantes de la température,
- créer et diriger vers l'objet, un faisceau incident électromagnétique comportant au moins la première (**E**_{**1**}) et la deuxième (**E**_{**2**}) énergies de photons,
- mesurer, à partir des paramètres d'ellipsométrie (**P'E**_{**1**}**, P'E**_{**2**}), le changement de polarisation pour la première (**E**_{**1**}) et la deuxième (**E**_{**2**}) énergies de photons du ou des faisceaux réfléchis par l'objet,
- déterminer, à partir de la mesure du changement de polarisation pour la première énergie de photons (**E**_{**1**}) du faisceau, l'épaisseur de la couche du matériau,
- et à déterminer la température de la surface de l'objet, à partir de la mesure du changement de polarisation pour la deuxième énergie de photons (**E**_{**2**}) du faisceau et en tenant compte de l'épaisseur de la couche de matériau préalablement déterminée.

2. Procédé selon la revendication 1, caractérisé en ce qu'il consiste, pour déterminer la température de surface de l'objet, à :
- déterminer pour un objet nu, c'est-à-dire exempt de couche superficielle, la loi de variation des paramètres de mesures d'ellipsométrie en fonction de la température de l'objet,
- déterminer à partir des paramètres d'ellipsométrie (**P'E**_{**2**}) mesurés pour la deuxième énergie de photons (**E**_{**2**}), les paramètres fictifs (**P"E**_{**2**}) qui seraient obtenus pour un substrat sur lequel l'épaisseur précédemment calculée aurait été enlevée,
- et déterminer la température de l'objet à partir des paramètres fictifs (**P''E**_{**2**}) et de la loi de la variation précédemment réalisée.

3. Procédé selon la revendication 1, caractérisé en ce qu'il consiste à diriger successivement sur l'objet les faisceaux incidents présentant les première (**E**_{**1**}) et deuxième (**E**_{**2**}) énergies de photons.

4. Procédé selon la revendication 1 ou 3, caractérisé en ce qu'il consiste à diriger le ou les faisceaux en direction d'une pastille d'un matériau, fixée à la surface de l'objet et pour laquelle les première (**E**_{**1**}) et deuxième (**E**_{**2**}) énergies de photons peuvent être déterminées.

5. Procédé selon la revendication 1, caractérisé en ce qu'il consiste à créer et diriger vers un objet réalisé en silicium un faisceau incident électromagnétique présentant la première énergie de photons (**E**_{**1**}) comprise entre 3,5 et 4 eV et, de préférence, égale à 3,75 eV.

6. Procédé selon la revendication 1, caractérisé en ce qu'il consiste à créer et diriger vers un objet réalisé en silicium un faisceau incident électromagnétique présentant une deuxième (**E**_{**2**}) ou une troisième (**E**_{**3**}) énergie de photons comprise, repectivement entre 3,25 à 3,4 eV ou 4,25 à 4,5 eV et, de préférence, égale à 3,3 ou 4,3 eV.

7. Procédé selon la revendication 1, caractérisé en ce qu'il consiste à créer et diriger ver un objet réalisé en Phosphure d'Indium, au moins un faisceau électromagnétique présentant une première (**E**_{**1**}) et une deuxième (**E**_{**2**}) ou troisième (**E**_{**3**}) énergies de photons égales, sensiblement respectivement à 3,4 eV, 3 eV et 4,6 eV.

8. Procédé selon la revendication 1, caractérisé en ce qu'il consiste à créer et diriger ver un objet réalisé en Germanium, au moins un faisceau électromagnétique présentant une première (**E**_{**1**}) et une deuxième (**E**_{**2**}) ou troisième (**E**_{**3**}) énergies de photons égales, sensiblement respectivement 2,9 eV, 2,1 eV et 4,3 eV.

9. Procédé selon la revendication 1, caractérisé en ce qu'il consiste à créer et diriger ver un objet réalisé en Arséniure de Gallium, au moins un faisceau électromagnétique présentant une première (**E**_{**1**}) et une deuxième (**E**_{**2**}) ou troisième (**E**_{**3**}) énergies de photons égales, sensiblement respectivement 3,5 eV, 2,5 eV et 4,5 eV.

10. Dispositif de mesure de la température de surface d'un objet (**8**), pourvu d'au moins une couche d'un matériau, mettant en oeuvre le procédé selon la revendication 1, le dispositif comprenant :
- un système (**1**) de création d'un faisceau lumineux délivrant un faisceau d'énergie incident (**2**) sur le trajet duquel est placé un polarisateur et/ou un modulateur (**7**),
- un système de mesure (**11**) de la polarisation du faisceau d'énergie (**14**) réfléchi par l'objet (**8**),
- et une unité de traitement (**17**) reliée au système de mesure (**11**) et comportant :
. des moyens permettant de déterminer, pour la couche de matériau considérée, la variation des paramètres mesurés par ellipsométrie en fonction de la longueur d'onde du faisceau,
. des moyens de détermination de l'épaisseur de la couche de matériau en fonction du changement de polarisation du faisceau lumineux,
caractérisé en ce qu'il comprend :
- un moyen (**3**) pour sélectionner au moins un faisceau d'énergie électromagnétique présentant au moins deux énergies de photons (**E**_{**1**}**, E**_{**2**}**, E**_{**3**}) de valeurs déterminées à partir de la variation de l'indice optique de l'objet en fonction de la longueur d'onde, l'une des énergies de photons (**E**_{**2**}**, E**_{**3**}) étant dépendante de la température, tandis que l'autre (**E**_{**1**}) est sensiblement indépendante de la température,
- des moyens de détermination de l'épaisseur de la couche de matériau pour le faisceau présentant la première énergie (**E**_{**1**}) de photons,
- et des moyens de calcul de la température de la surface de l'objet, à partir de la mesure du changement de polarisation pour la deuxième énergie de photons du faisceau et en tenant compte de l'épaisseur de la couche de matériau préalablement déterminée.

## Patentansprüche

1. Verfahren zur Oberflächentemperaturmessung eines Gegenstandes (8), auf dem mindestens eine Schicht eines Materials abgelagert ist, in dem ellipsometrische Messungen durchgeführt werden, die die Messungen der Polarisationsänderung eines elektromagnetischen Strahls beinhalten, der von der Oberfläche des Gegenstandes reflektiert wird,
gekennzeichnet durch die Schritte:
- Ausführen der ellipsometrischen Messung am Gegenstand, um, ausgehend von den gemessenen Parametern (PE₁, PE₂), einerseits mindestens eine erste Photonenenergie (E₁) eines elektromagnetischen Strahls zu bestimmen, wofür die Messungen stark temperaturunabhängig sind, und andererseits mindestens eine zweite Photonenenergie (E₂) eines elektromagnetischen Strahls zu bestimmen, wofür die Messungen temperaturabhängig sind,
- Erzeugen und Richten eines einfallenden elektromagnetischen Strahls, der aus mindestens der ersten (E₁) und der zweiten (E₂) Photonenenergie besteht, auf den Gegenstand,
- Messen, ausgehend von den ellipsometrischen Parametern (P'E₁, P'E₂), der Polarisationsänderung der ersten (E₁) und der zweiten (E₂) Photonenenergie, deren Strahlen durch den Gegenstand reflektiert wurden,
- Bestimmen der Schichtdicke des Materials, ausgehend von der Messung der Polarisationsänderung der ersten Photonenenergie (E₁) des Strahls, und
- Bestimmen der Oberflächentemperatur des Gegenstands, ausgehend von der Messung der Polarisationsänderung der zweiten Photonenenergie (E₂) des Strahls und unter Berücksichtigung der vorher ermittelten Schichtdicke des Materials.

2. Verfahren nach Anspruch 1, dadurch gekennzeichnet, daß zur Bestimmung der Oberflächentemperatur des Objektes folgende Schritte ausgeführt werden:
- Bestimmen des Gesetzes der Änderung der ellipsometrischen Meßparameter in Temperaturabhängigkeit des Gegenstands für einen blanken Gegenstand, d.h. für einen Gegenstand, der frei von der Oberflächenschicht ist,
- Bestimmen, ausgehend von den für die zweite Photonenenergie (E₂) gemessenen ellipsometrischen Parametern (P'E₂), des fiktiven Parameters (P"E₂), der für ein Substrat erhalten wurde, für das die vorher ermittelte Dicke abgezogen wurde,
- Bestimmen der Temperatur des Gegenstands, ausgehend von den fiktiven Parametern (P"E₂) und dem vorher bestimmten Gesetz der Änderung.

3. Verfahren nach Anspruch 1, dadurch gekennzeichnet, daß die die erste (E₁) und die zweite (E₂) Photonenenergie aufweisenden einfallenden Strahlen nacheinander auf den Gegenstand gerichtet werden.

4. Verfahren nach Anspruch 1 oder 3, dadurch gekennzeichnet, daß der oder die Strahlen auf eine Materialtablette gerichtet werden, die an der Oberfläche des Gegenstandes befestigt ist und für die die erste (E₁) und die zweite (E₂) Photonenenergie bestimmt werden kann.

5. Verfahren nach Anspruch 1, dadurch gekennzeichnet, daß aus der Erzeugung und dem Richten ein die erste Photonenenergie (E₁) aufweisender einfallender, elektromagnetischer Strahl erzeugt wird, der eine Energie zwischen 3,5 und 4 eV aufweist, vorzugsweise 3,75 eV, und auf den ein aus Silizium bestehender Gegenstand gerichtet wird.

6. Verfahren nach Anspruch 1, dadurch gekennzeichnet, daß ein einfallender elektromagnetischer Strahl erzeugt wird, der eine zweite (E₂) oder eine dritte (E₃) Photonenenergie besitzt, die zwischen 3,25 und 3,4 eV bzw. zwischen 4,25 und 4,5 eV liegt, vorzugsweise 3,3 oder 4,3 eV, auf einen aus Silizium bestehenden Gegenstand gerichtet wird.

7. Verfahren nach Anspruch 1, dadurch gekennzeichnet, daß mindestens ein elektromagnetischer Strahl erzeugt wird, der eine erste (E₁) und eine zweite (E₂) oder eine dritte (E₃) Photonenenergie aufweist, im wesentlichen gleich 3,4 eV, 3 eV bzw. 4,6 eV, und auf einen aus Indiumphosphat bestehenden Gegenstand gerichtet wird.

8. Verfahren nach Anspruch 1, dadurch gekennzeichnet, daß mindestens ein elektromagnetischer Strahl erzeugt wird, der eine erste (E₁) und eine zweite (E₂) oder eine dritte (E₃) Photonenenergie aufweist, im wesentlichen gleich 2,9 eV, 2,1 eV bzw. 4,3 eV, und auf einen aus Germanium bestehenden Gegenstand gerichtet wird.

9. Verfahren nach Anspruch 1, dadurch gekennzeichnet, daß mindestens ein elektromagnetischer Strahl, der eine erste (E₁) und eine zweite (E₂) oder eine dritte (E₃) Photonenenergie aufweist, im wesentlichen gleich 3,5 eV, 2,5 eV bzw. 4,5 eV, und auf einen aus Galliumarsenid bestehenden Gegenstand gerichtet wird.

10. Vorrichtung zur Oberflächentemperaturmessung mindestens eine Materialschicht aufweisenden Gegenstandes (8), die das Verfahren nach Anspruch 1 durchführt, mit:
- einem System (1) zur Erzeugung eines Lichtstrahls, das einen einfallenden Energiestrahl (2) auf das Ziel erzeugt, in dem ein Polarisator und/oder ein Modulator (7) angeordnet ist,
- einem Polarisationsmeßgerät (11) für den Energiestrahl (14), der durch den Gegenstand (8) reflektiert wurde, und
- einer Verarbeitungseinheit (17), die mit einem Meßgerät (11) verbunden ist und enthält:
. eine Einrichtung, die für die betrachtete Materialschicht die Änderung der durch Ellipsometrie gemessenen Parameter in Abhängigkeit der Wellenlänge des Strahls ermitteln kann, und
. eine Einrichtung, die die Schichtdicke des Materials, in Abhängigkeit der Polarisationsänderung des Lichtstrahls ermitteln kann,
gekennzeichnet durch
- eine Einrichtung (3) zum Auswählen von mindestens einem elektromagnetischen Energiestrahl, der mindestens zwei Photonenenergien (E₁, E₂, E₃) aufweist, deren Werte ausgehend von der Änderung des Brechungsindex des Gegenstandes in Abhängigkeit der Wellenlänge ermittelt wurden, eine der Photonenenergien (E₂, E₃) temperaturabhängig ist und die andere (E₁) stark temperaturunabhängig ist,
- eine Einrichtung zum Bestimmen der Schichtdicke des Materials, mit Hilfe des die erste Photonenenergie (E₁) aufweisenden Strahls, und
- eine Einrichtung zum Berechnen der Oberflächentemperatur des Gegenstands, ausgehend von der Messung der Polarisationsänderung der zweiten Photonenenergie des Strahls und unter Berücksichtigung der vorher ermittelten Schichtdicke des Materials.

## Claims

1. A method for measuring the surface temperature of an object (8) on which at least one layer of material is deposited, by performing ellipsometric measurements that consist in measuring the change of polarisation of an electromagnetic beam that is reflected on the surface of an object, the method being characterised in that it consists in:
- performing ellipsometric measurements on the object in order to determine, on the basis of measured parameters (PE₁, PE₂), firstly at least one first photon energy (E₁) for an electromagnetic beam at which measurements are substantially independent of temperature, and secondly at least one second photon energy (E₂) for an electromagnetic beam at which measurements are dependent on temperature;
- creating and directing towards the object, an incident electromagnetic beam including at least the first and second photon energies (E₁, E₂);
- measuring the change of polarisation in the first and second photon energies (E₁, E₂) of the beam(s) reflected by the object on the basis of ellipsometric parameters (P'E₁, P'E₂);
- determining the thickness of the layer of material on the basis of the measured change in polarisation at the first photon energy (E₁) of the beam; and
- determining the surface temperature of the object on the basis of the measured change in polarisation for the second photon energy (E₂) of the beam, while taking account of the previously determined thickness of the layer of material.

2. A method according to claim 1, characterised in that in order to determine the surface temperature of the object, it consists in:
- determining for a bare object, i.e. an object having no surface layer, the relationship between ellipsometric measurement parameters and the temperature of the object;
- determining from the ellipsometric parameters (P'E₂) measured at the second photon energy (E₂), dummy parameters (P"E₂) that would have been obtained on a substrate from which the previously calculated thickness had been removed; and
- determining the temperature of the object on the basis of the dummy parameters (P"E₂) and the previously established relationship.

3. A method according to claim 1, characterised in that it consists in successively directing on the object incident beams having the first photon energy (E₁) and the second photon energy (E₂).

4. A method according to claim 1 or 3, characterised in that it consists in directing the beam(s) at a pellet of material which is fixed on the surface of the object and for which the first and second photon energies (E₁, E₂) can be determined.

5. A method according to claim 1, characterised in that it consists in creating and directing towards an object made of silicon, an electromagnetic incident beam having the first photon energy (E₁) lying in the range 3.5 eV to 4eV, and preferably being equal to 3.75 eV.

6. A method according to claim 1, characterised in that it consists in creating and directing towards an object made of silicon, an electromagnetic incident beam having a second (E₂) or a third (E₃) photon energy respectively lying in the range 3.25 eV to 3.4 or 4.25 eV to 4.5 eV, and preferably equal respectively to 3.3 eV or 4.3 eV.

7. A method according to claim 1, characterised in that it consists in creating and directing towards an object made of indium phosphide, at least one electromagnetic beam having first, second, or third photon energies (E₁, E₂, E₃) substantially equal respectively to 3.4 eV, 3 eV, and 4.6 eV.

8. A method according to claim 1, characterised in that it consists in creating and directing towards an object made of germanium, at least one electromagnetic beam having first, second, or third photon energies (E₁, E₂, E₃) substantially equal respectively to 2.9 eV, 2.1 eV, and 4.3 eV.

9. A method according to claim 1, characterised in that it consists in creating and directing towards an object made of gallium arsenide, at least one electromagnetic beam having first, second, or third photon energies (E₁, E₂, E₃) substantially equal respectively to 3.5 eV, 2.5 eV, and 4.5 eV.

10. Apparatus for measuring the surface temperature of an object (8) provided with at least one layer of material, the apparatus implementing the method according to claim 1 and comprising:
- a system (1) for creating a light beam delivering an incident energy beam (2) on whose path there is placed a polarizer and/or a modulator (7);
- a measurement system (11) for measuring the polarisation of the energy beam (14) reflected by the object (8); and
- a processor unit (17) connected to the measurement system (11) and including:
. means suitable for determining, for the layer of material under consideration, the way in which the parameters measured by ellipsometry vary as a function of beam wavelength; and
. means for determining the thickness of the layer of material as a function of the change in polarisation of the light beam;
the method being characterised in that it comprises:
- means (3) for selecting at least one electromagnetic energy beam having at least two photon energies (E₁, E₂, E₃) of values that are determined on the basis of variation in the refractive index of the object as a function of wavelength, one of the photon energies (E₂, E₃) being dependent on temperature while the other photon energy (E₁) is substantially independent of temperature;
- means for determining the thickness of the layer of material by using the beam having the first photon energy (E₁); and
- means for calculating the surface temperature of the object on the basis of the measured change in polarisation for beam photons having the second energy, while taking account of the previously determined thickness of the layer of material.
